# EUROPEAN PATENT SPECIFICATION

(11) **EP 3 637 537 B1**
(45) Date of publication and mention of the grant of the patent: **08.09.2021**
(21) Application number: 18200163.6
(22) Date of filing: 12.10.2018
(51) Int. Cl.: H01M 10/613, H01M 10/625, B60R 16/04

(54) **BYPASS TUBE FOR A COOLING CIRCUIT OF A VEHICLE BATTERY PACK**
UMGEHUNGSROHR FÜR EINEN KÜHLKREISLAUF EINES FAHRZEUGBATTERIEPACKS
TUBE DE DÉRIVATION DESTINÉ À UN CIRCUIT DE REFROIDISSEMENT D'UN BLOC-BATTERIE DE VÉHICULE

(43) Date of publication of application: 15.04.2020
(73) Proprietor: Samsung SDI Co., Ltd., Gyeonggi-do 17084 (KR)
(72) Inventor: Masaryk, Carl-Michael, 8010 Graz (AT); Pucher, Matthias, 8052 Graz (AT); Hörmann, Thomas, 8055 Graz (AT)
(74) Representative: Gulde & Partner

(56) References cited:
- WO-A1-2018/070675
- CN-A- 106 450 568
- KR-A- 20180 096 081
- US-A1- 2012 090 348

## Description

### Field of the Invention

The present invention relates to a cooling circuit of a battery pack of vehicles.

### Technological Background

In the recent years, vehicles for transportation of goods and peoples have been developed using electric power as a source for motion. Such an electric vehicle is an automobile that is propelled by an electric motor, using energy stored in rechargeable batteries. An electric vehicle may be solely powered by batteries or may be a form of hybrid vehicle powered by for example a gasoline generator. Furthermore, the vehicle may include a combination of electric motor and conventional combustion engine. In general, an electric-vehicle battery (EVB) or traction battery is a battery used to power the propulsion of battery electric vehicles (BEVs). Electric-vehicle batteries differ from starting, lighting, and ignition batteries because they are designed to give power over sustained periods of time. A rechargeable or secondary battery differs from a primary battery in that it can be repeatedly charged and discharged, while the latter provides only an irreversible conversion of chemical to electrical energy. Low-capacity rechargeable batteries are used as power supply for small electronic devices, such as cellular phones, notebook computers and camcorders, while high-capacity rechargeable batteries are used as the power supply for hybrid vehicles and the like.

In general, rechargeable batteries include an electrode assembly including a positive electrode, a negative electrode, and a separator interposed between the positive and negative electrodes, a case receiving the electrode assembly, and an electrode terminal electrically connected to the electrode assembly. An electrolyte solution is injected into the case in order to enable charging and discharging of the battery via an electrochemical reaction of the positive electrode, the negative electrode, and the electrolyte solution. The shape of the case, e.g. cylindrical or rectangular, depends on the battery's intended purpose. Lithium-ion (and similar lithium polymer) batteries, widely known via their use in laptops and consumer electronics, dominate the most recent group of electric vehicles in development.

Rechargeable batteries may be used as a battery module formed of a plurality of unit battery cells coupled in series and/or in parallel so as to provide a high energy density, in particular for motor driving of a hybrid vehicle. That is, the battery module is formed by interconnecting the electrode terminals of the plurality of unit battery cells depending on a required amount of power and in order to realize a high-power rechargeable battery.

A battery pack is a set of any number of battery modules. They may be configured in a series, parallel or a mixture of both to deliver the desired voltage, capacity, or power density. Components of battery packs include the individual battery modules, and the interconnects, which provide electrical conductivity between them. A battery management system (BMS) is provided for managing the battery pack, such as by protecting the battery from operating outside its safe operating area, monitoring its state, calculating secondary data, reporting that data, controlling its environment, authenticating it and/or balancing it.

The mechanical integration of such a battery pack requires appropriate mechanical connections between the individual components, e.g. of battery modules, and between them and a supporting structure of the vehicle. These connections must remain functional and save during the average service life of the battery system. Further, installation space and interchangeability requirements must be met, especially in mobile applications.

Mechanical integration of battery modules can be achieved by providing a carrier framework and by positioning the battery modules thereon. Fixing the battery cells or battery modules may be achieved by fitted depressions in the framework or by mechanical interconnectors such as bolts or screws. Alternatively, the battery modules are confined by fastening side plates to lateral sides of the carrier framework. Further, cover plates may be fixed atop and below the battery modules.

The carrier framework of the battery pack is mounted to a carrying structure of the vehicle. In case the battery pack shall be fixed at the bottom of the vehicle, the mechanical connection may be established from the bottom side by for example bolts passing through the carrier framework of the battery pack. The framework is usually made of aluminum or an aluminum alloy to lower the total weight of the construction. Battery systems according to the prior art, despite any modular structure, usually comprise a battery housing that serves as enclosure to seal the battery system against the environment and provides structural protection of the battery system's components. Housed battery systems are usually mounted as a whole into their application environment, e.g. an electric vehicle. According to one embodiment, the battery modules may be arranged at different levels of the battery pack with respect to the mounting direction of the battery pack. Thus, the framework will include respective supporting structures in the different levels of the battery pack, like cross braces, where the battery modules will be attached to.

To provide thermal control of the battery pack a thermal management system is required to safely use the at least one battery module by efficiently emitting, discharging and/or dissipating heat generated from its rechargeable batteries. If the heat emission/discharge/dissipation is not sufficiently performed, temperature deviations occur between respective battery cells, such that the at least one battery module cannot generate a desired amount of power. In addition, an increase of the internal temperature can lead to abnormal reactions occurring therein and thus charging and discharging performance of the rechargeable deteriorates and the life-span of the rechargeable battery is shortened. Cell cooling for effectively emitting/discharging/dissipating heat from the cells is required. Thus, high voltage traction battery systems almost always include a thermal condition system in order to fulfill lifetime and performance requirements.

Therefore, the thermal management system may include a liquid cooling circuit. In general, the liquid cooling circuit may include several components, like cooling plates being in thermal contact with the battery modules, pipes or hoses for forwarding the liquid coolant, and coolant interfaces for connecting the pipes or hoses with the cooling plates, respectively a vehicles cooling circuit. During assembly or after maintenance of the cooling system, a liquid cooling fluid must be (re)filled into the cooling circuit and therefore conventionally cooling systems are equipped with a venting system for air. For example, spring type valves are positioned on the highest point of the cooling system, where the air usually accumulates, and are operated manually. However, due to its position the valve is usually not freely accessible and venting the cooling system is complicated. Furthermore, tightness of the valve may be lost over the entire lifetime of the battery system due to different material properties of valves and coolant tubes. These disadvantages may specifically occur in cooling systems for battery packs, where battery modules are assembled on different levels.

KR 2018-0096081 A1 discloses a heat exchanger for a battery module. The heat exchanger comprises an inlet header being connected to a refrigerant inlet pipe. The inlet header includes a first space in which a liquid refrigerant and a gaseous refrigerant are separated from each other and a second space being in fluid communication with cooling tubes which themselves are connected to an outlet header. The heat exchanger further includes a bypass tube having one end connected to an upper portion of the inlet header and the other end connected to the outlet header.

It is thus an object of the present invention to overcome or reduce at least some of the drawbacks of the prior art and to provide a battery pack, where the process of venting of the liquid circuit is simplified.

### Summary of Invention

One or more of the drawbacks of the prior art are avoided or at least reduced by means of the present invention, particularly by the subject-matter of the appended independent claim.

The present invention provides a novel battery pack for a vehicle. The battery pack comprises:
- a plurality of battery modules being positioned above each others in at least two different levels of the battery pack; and
- a liquid cooling circuit being in thermal contact with the battery modules in each of the levels of the battery pack.

The liquid cooling circuit includes a bypass tube with an inlet opening positioned at a highest point of the cooling circuit and an outlet opening positioned at a lower point of the cooling circuit within the cooling circuit. The cooling circuit further includes a connection tube vertically extending between the levels of the battery pack and the bypass tube passes through the interior of the connection tube.

Hence, the inventive battery pack includes two or more battery modules, which are arranged at different levels of the battery pack with respect to the mounting direction of the battery pack at the vehicle. For example, the battery pack may include a lower level provided at a bottom of the battery pack, where one or more battery modules are assembled, and an upper level, where further battery modules could be assembled. The upper level will be located between the lower level and the topside of the battery pack facing the vehicle. For example, a framework of the battery pack will include respective supporting structures in the different levels of the battery pack, like cross braces, where the battery modules will be attached to.

Each of the battery modules will be equipped with cooling elements so as to ensure thermal control of the battery modules. These cooling elements may be part of a common liquid cooling circuit, which involves further components to promote and distribute the liquid cooling fluid, like for example water. The liquid circuit will extend over each of the battery pack levels, where battery modules are assembled. Generally, the liquid fluid will be first introduced into the lower level of the battery pack causing a higher flow velocity in this area of the cooling circuit compared to the levels provided above. During assembly or after maintenance of the cooling system, the liquid fluid must be (re)filled into the cooling circuit. However, air will be accumulated at the highest point of the cooling circuit.

Therefore, a main aspect of the present invention is to integrate a bypass tube into the liquid cooling circuit instead of conventional venting valves. An upper end of said bypass tube is positioned at the highest point of the liquid cooling circuit, where air accumulates. A lower end of the bypass tube merges into a lower part of the liquid cooling circuit. Due to a higher flow speed of the coolant in the lower part of the cooling circuit, negative pressure is generated and air accumulated at the highest point is sucked through the bypass tube. Ventilation may thus be achieved downstream the lower end of the bypass tube and ventilation valves need not to be provided at the highest point of the cooling circuit. In particular, the inlet opening of the bypass tube may be positioned at the highest point and upstream of the cooling circuit and the outlet opening may be positioned at a lower or lowest point and downstream of the cooling circuit within the cooling circuit. The difference of pressure at the inlet opening and outlet opening should be as high as possible.

According to one embodiment, the outlet opening of the bypass tube is positioned in a cooling tube provided at the lowest level of the battery pack. In other words, the part of the cooling circuit where the lower end of the bypass tube is located is a cooling tube. The lower end of the bypass tube may be arranged such that the outlet opening faces in flow direction of the liquid fluid so as to create the negative pressure in the bypass tube. The outlet opening may further be positioned centrally within the cooling tube and thereby the coolant fluid velocity flowing around the outlet opening will be homogeneous.

The bypass tube, not according to the present invention, may be a separate cooling circuit component, which is directly accessible from the outside of the coolant circuit. For example, the bypass tube may include a hose which is coupled to respective connection ports provided at cooling tubes. These connection ports merge into the inlet opening, respectively outlet opening. However, according to the present invention, the cooling circuit includes a connection tube vertically extending between the levels of the battery pack and the bypass tube passes through the interior of the connection tube. In other words, the bypass tube is not directly accessible, but extends inside the connection tube. This solution is favorable in terms of required build in space and assembly efforts.

According to another embodiment, a ratio of a cross section of the outlet opening of the bypass tube and a cross section of the cooling tube at the outlet opening is in the range of 1 : 2 to 1 : 10, preferably 1 : 2 to 1 : 10. Keeping the cross sections in the mentioned ranges ensures that the assembling of the bypass tube has no significant inhibitory effect on fluid velocity and the thermal performance of the cooling circuit following downstream.

The bypass tube may be formed of any suitable material. However, when the inlet opening is positioned in a component of the liquid circuit being made of a plastic material, the bypass tube is preferably made of the very same plastic material. Thereby, tightness problems and material failure caused by different thermal expansion may be avoided. Furthermore, the bypass tube may be integrally formed with parts of other parts of the cooling circuit for simplifying the assembling process of the battery pack.

According to another embodiment, which is preferably combined with any of the before mentioned embodiments, at least the uppermost level of the battery pack includes a carrier plate for one or more battery modules, wherein the carrier plate includes an integral cooling channel structure. The cooling circuit further includes a coolant recipient configured for connection to outlet openings of the integral cooling channel structure of the carrier plate. The inlet opening of the bypass tube is positioned at the coolant recipient. Thus, no additional component needs to be integrated into the cooling circuit, but only a commonly used coolant recipient is modified.

Further aspects of the present invention could be learned from the dependent claims or the following description.

### Brief Description of the Drawings

Features will become apparent to those of ordinary skill in the art by describing in detail exemplary embodiments with reference to the attached drawings in which:
- Fig. 1: is a schematic view on a vehicle including a battery pack;
- Fig. 2: illustrates a perspective view of a conventional battery module;
- Figs. 3 and 4: illustrates schematically a front view and a back view on a part of 2-level battery pack including components of a liquid cooling circuit and a bypass tube not falling under the present invention;
- Fig. 5: illustrates an enlarged cross sectional view on an upper part of the bypass tube shown in Fig. 4, not falling under the present invention.
- Fig. 6: illustrates an enlarged cross sectional view on a lower part of the bypass tube shown in Fig. 4, not falling under the present invention; and
- Fig. 7: illustrates an embodiment of the bypass tube according to the present invention.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. As used herein, the term "may" when describing embodiments of the present invention refers to "one or more embodiments of the present invention."

Herein, the terms "upper" and "lower" are defined according to the z-axis. For example, the upper side is positioned at the upper part of the z-axis, whereas the lower side is positioned at the lower part thereof. In the drawings, the sizes of elements may be exaggerated for clarity. For example, in the drawings, the size or thickness of each element may be arbitrarily shown for illustrative purposes, and thus the embodiments of the present invention should not be construed as being limited thereto.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present invention defined by the claims.

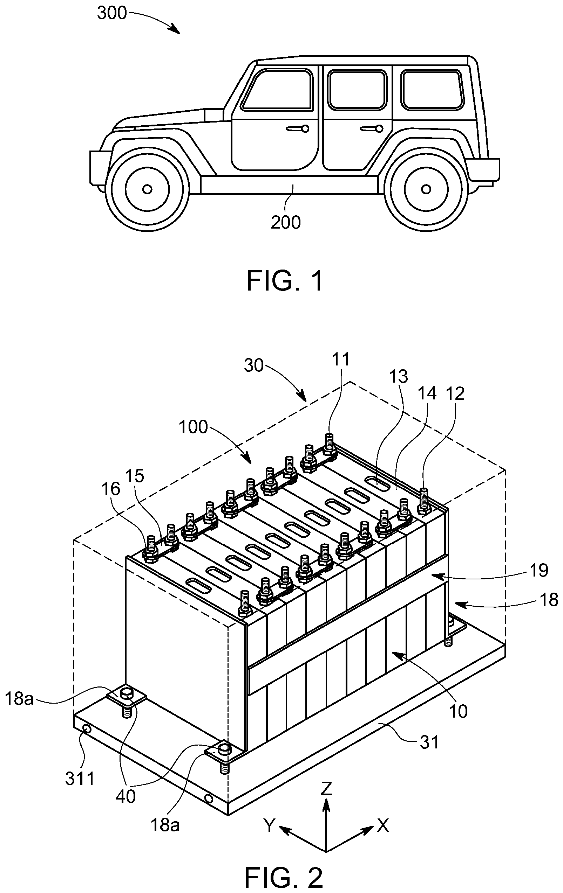

Battery packs of electric or hybrid vehicles demand huge space and are therefore usually positioned at the lower side of the vehicle bodies. In particular, the battery pack may be fixed to a floor of a vehicle carrying structure. Battery packs according to the prior art, despite any modular structure, usually comprise a battery housing that serves as enclosure to seal the battery pack against the environment and provides structural protection of the battery pack's components. Housed battery packs are usually mounted as a whole into their application environment, e.g. an electric vehicle. In alternative, the battery pack may be configured for being structurally integrated in the vehicle carrying structure and may comprise attachment means that are configured to be connected to the vehicle body for structural integration. In other words, the vehicle body part may comprise the battery system carrier and may be directly integrated into the vehicle body instead of being mounted or attached to the vehicle body. The present invention could be realized in any of the before mentioned variants. Figure 1 illustrates in a schematically way a vehicle 300 including a battery pack 200 mounted to the ground of a carrying structure of the vehicle 300.

Referring to Fig. 2, an exemplary embodiment of a battery module 100, not falling under the present invention, includes a plurality of battery cells 10 aligned in one direction. A pair of end plates 18 are provided to face wide surfaces of the battery cells 10 at the outside of the battery cells 10, and a connection plate 19 is configured to connect the pair of end plates 18 to each other thereby fixing the plurality of battery cells 10 together. Fastening portions 18a on both sides of the battery module 100 are fastened to a carrier plate 31 by bolts 40. Thus, a top surface of the carrier plate 31 is configured for supporting the battery module 100. The carrier plate 31 may be part of a module housing 30.

Here, each battery cell 10 is a prismatic (or rectangular) cell, the wide flat surfaces of the cells being stacked together to form the battery module. Further, each battery cell 10 includes a battery case configured for accommodation of an electrode assembly and an electrolyte. The battery case is hermetically sealed by a cap assembly 14. The cap assembly 14 is provided with positive and negative electrode terminals 11 and 12 having different polarities, and a vent 13. The vent 13 is a safety means of the battery cell 10, which acts as a passage through which gas generated in the battery cell 10 is exhausted to the outside of the battery cell 10. The positive and negative electrode terminals 11 and 12 of neighboring battery cells 10 are electrically connected through a bus bar 15, and the bus bar 15 may be fixed by a nut 16 or the like. Hence, the battery module 100 may be used as power source unit by electrically connecting the plurality of battery cells 10 as one bundle. The battery pack 10 may include a plurality of battery modules 100.

Generally, the battery cells 10 generate a large amount of heat while being charged/discharged. The generated heat is accumulated in the battery cells 10, thereby accelerating the deterioration of the battery cells 10. Therefore, the carrier plate 31 of the battery module 100 further includes an integral cooling channel structure having two inlet openings 311 at a side wall of the carrier plate 31. The integral cooling channel structure is provided adjacent to the bottom surface of the battery cells 10 so as to cool down the battery cells 10. The integral cooling channel structure includes a hollow profile comprising coolant channels that are fluidly connecting the inlet openings 311 and outlet openings (not shown) at an opposite side wall of the carrier plate 31. The hollow profile may have various cross-sectional shapes, such as e.g. a circular or a rectangular cross-sectional shape. Preferably, the hollow profile is an extruded aluminum profile. Such lightweight extruded profiles can be manufactured easily and cost-effectively.

The integral cooling channel structure is part of a liquid cooling circuit of the battery pack 200. The liquid circuit may include several other components besides the carrier plates 31 with the integral cooling channel structure, such as pumps, pipes or hoses for forwarding the liquid coolant, and coolant distributors or interfaces for connecting the pipes or hoses with the carrier plates 31, respectively a vehicles cooling circuit.

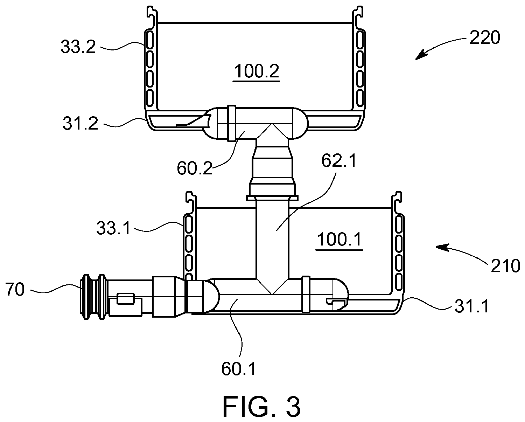

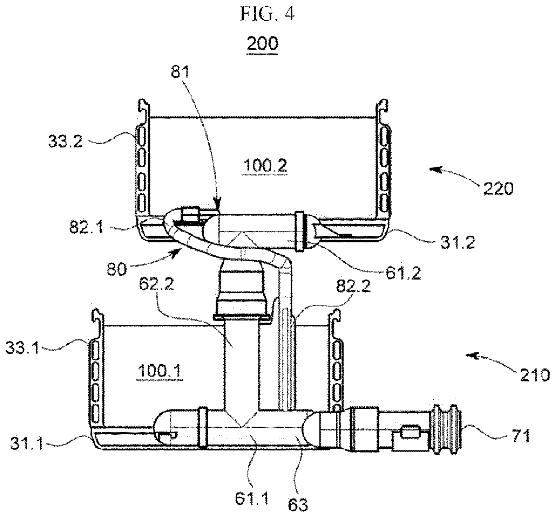

According to the embodiment illustrated in Figures 3 and 4, not falling under the present invention, the battery pack 200 is a 2-level battery pack. That is, the battery pack 200 includes a lower level (or floor) 210, where first battery modules 100.1 lie within a common plain (here only one of these battery modules is illustrated). Second battery modules 100.2 are assembled above the first battery modules 100.1 and form a common upper level 220 of the battery pack 200 (again only one of the battery modules of the second level is illustrated). When the battery pack 200 is mounted to the vehicle 300, the upper level 220 faces the underbody of the vehicle 300.

The battery modules 100.1 and 100.2 are each provided on carrier plates 31.1 and 31.2, which form together with two side plates 33.1, 33.2 a part of a housing for the battery modules 100.1 and 100.2. The side plates 33.1, 33.2 and the carrier plates 31.1, 31.2 may be made of extruded aluminum. The battery cells of the battery modules 100.1 and 100.2 are placed on a top surface of the carrier plates 31.1, 31.2. On the underside of the carrier plates 31.1, 31.2 illustrated in Figure 3, there are inlet openings (not shown) being in fluid connection with an integral cooling channel structure of the carrier plates 31.1, 31.2. At the opposite end of the module housing, which is schematically illustrated in Figure 4, corresponding outlet openings (not shown) of the integral cooling channel structure are provided at the carrier plates 31.1, 31.2.

Further, a liquid cooling circuit is being in thermal contact with the battery modules 100.1 and 100.2 in each of the levels 210, 220 of the battery pack 200. According to the exemplary embodiment illustrated in Figures 3 and 4, the coolant circuit includes coolant distributors 60.1 and 60.2 for coupling to the inlet openings of the integral cooling channel structure and coolant recipients 61.1 and 61.2 for coupling to the outlet openings of the integral cooling channel structure.

Furthermore, a connection tube 62.1, 62.2 is vertically extending between the levels 210, 220 of the battery pack 200 so as to allow coolant fluid circulation between these levels of the battery pack 200. Here, the connection tubes 62.1, 62.2 are integrally designed with the coolant distributor 60.1, respectively the coolant recipient 61.1, but not limited thereto. Further, a cooling tube 63 is attached downstream to the coolant recipient 61.1. According to the exemplary embodiment, the cooling tube 63 and coolant recipient 61.1 are integrally formed, but not limited thereto.

A liquid fluid which is introduced into the cooling circuit via an inlet 70 will thus first enter the coolant distributor 60.1 on lower level 210 and coolant distributor 60.2 via connection tube 62.1 on upper level 220. The liquid fluid will then pass the integral cooling channel structures of the carrier plates 31.1, 31.2 and leave the same at the coolant recipients 61.1, 61.2. After passing the coolant recipient 61.1 at the lower level 210 the liquid fluid will flow towards outlet 71 of the cooling circuit. The flow velocity of the fluid liquid in the cooling tube 63 towards the outlet 71 is higher than the flow velocity of the fluid liquid in the coolant recipient 61.2 of the upper level 220.

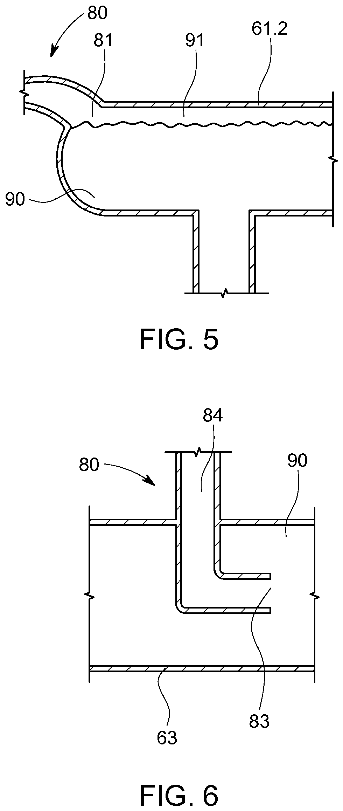

As illustrated in Fig. 4, the liquid cooling circuit includes a bypass tube 80 with an inlet opening 81 positioned at a highest point of the cooling circuit, here the uppermost part of coolant recipient 61.2. An outlet opening 83 (See Fig. 6) is positioned at a lower point of the cooling circuit, here within the cooling tube 63.

The outlet opening 83 of the bypass tube 80 may have a cross section which is about 1 : 10 compared to the cross section of the cooling tube 63 at the outlet opening 83. The cross section of the bypass tube 80 may be substantially equal in all sections of the bypass tube 80, i.e. the cross section at the inlet opening 81 may be similar to that of the outlet opening 83.

According to the embodiment illustrated in Figure 4, not falling under the present invention, the bypass tube 80 includes a first section 82.1 designed as a flexible hose and a second section 82.2, which is made of a rigid plastic material and is being firmly fixed to the connection tube 62.2 and the coolant recipient 61.1. Here, the second section 82.2 is made of the same plastic material as the connection tube 62.2 and the coolant recipient 61.1. If air is accumulated in the coolant recipient 61.2 of the upper level 220, the air will be sucked through the inlet 81 via the bypass tube 80 and leave the cooling circuit via outlet 71.

Figure 5 schematically illustrates a cross sectional view through a part of the coolant recipient 61.2, where the inlet 81 of the bypass tube 80 is positioned. For purpose of illustration, a liquid fluid 90 is added to the drawing. Above the liquid fluid 90, air will be accumulated in a region 91. The inlet 81 of the bypass tube 80 represents the highest point of the cooling circuit and thus the air in the region 91 may pass through the inlet 81 when a negative pressure is feed to the lower end of the bypass tube 80.

Figure 6 schematically illustrates a cross sectional view through a part of the cooling tube 63, where the outlet 83 of the bypass tube 80 is centrally positioned within the cooling tube 63. For purpose of illustration, the liquid fluid 90 flowing rapidly through the cooling tube 63 towards the outlet 71 of the cooling circuit is added to the drawing. Here, air has been accumulated within a space 84 provided in the interior of the bypass tube 80. The bypass tube 80 passes through a wall of the cooling tube 63 and is bent in downstream direction of the liquid fluid 90. When the flow velocity of the liquid fluid 90 within the coolant tube 63 is higher than the flow velocity in the coolant recipient 61.2 of the upper level 220, the air within space 84 will be sucked out of the bypass tube 80 and transported towards the outlet 71 of the cooling circuit.

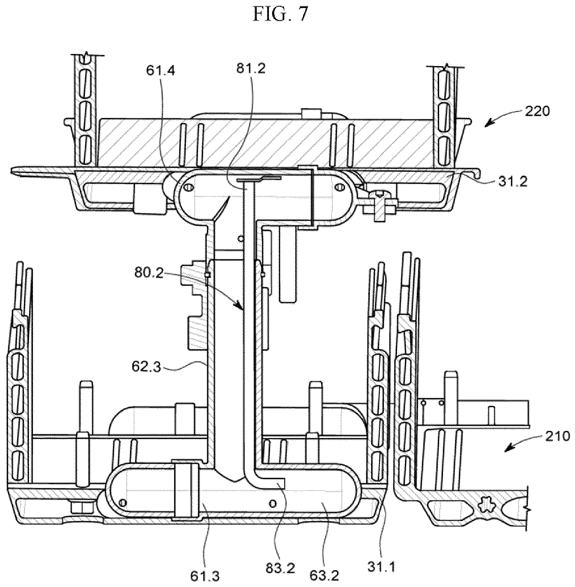

Figure 7 illustrates a cross sectional view on an embodiment including an inventive bypass tube. Again, the battery pack is a 2-level battery pack including an upper level 220 and lower level 210 similar to the embodiment described above with respect to Figures 3 and 4, but not limited thereto. A coolant recipient 61.4 is joined to the outlets of the integral cooling channel structures of carrier plate 31.2. A connection tube 62.3 is tightly fitted to a lower part of the coolant recipient 61.4. The connection tube 62.3 is integrally formed with a coolant recipient 61.3 and a cooling tube 63.2 provided at the lower level 210 of the battery pack. The bypass tube 80.2 passes through the interior of the connection tube 62.3. An inlet opening 81.2 of the bypass tube 80.2 is assembled closed to an upper wall of the coolant recipient 61.4. An outlet opening 83.2 of the bypass tube 80.2 is located within the cooling tube 63.2. The bypass tube 80.2 is firmly fixed to the connection tube 62.3.

## Claims

1. A battery pack (200) for a vehicle (300), comprising:
- a plurality of battery modules (100.1, 100.2) being positioned above each others in at least two different levels (210, 220) of the battery pack (200); and
- a liquid cooling circuit being in thermal contact with the battery modules (100.1, 100.2) in each of the levels (210, 220) of the battery pack (200),
wherein the liquid cooling circuit includes a bypass tube (80.2) with an inlet opening (81.2) positioned at a highest point of the cooling circuit and an outlet opening (83.2) positioned at a lower point of the cooling circuit within the cooling circuit,
wherein the cooling circuit includes a connection tube (62.3) vertically extending between the levels (210, 220) of the battery pack (200), and
wherein the bypass tube (80.2) passes through the interior of the connection tube (62.3).

2. The battery pack of claim 1, wherein the outlet opening (83.2) of the bypass tube (80.2) is positioned in a cooling tube (63.2) provided at the lowest level (210) of the battery pack (200).

3. The battery pack of claim 2, wherein a ratio of a cross section of the outlet opening (83.2) of the bypass tube (80.2) and a cross section of the cooling tube (63.2) at the outlet opening (83.2) is in the range of 1 : 2 to 1 : 10, preferably in the range of 1 : 3 to 1 : 5.

4. The battery pack of any one of the preceding claims, wherein at least the uppermost level (220) of the battery pack (200) includes a carrier plate (31.2) for one or more battery modules (100.2), the carrier plate (31.2) including an integral cooling channel structure,
wherein the cooling circuit further includes a coolant recipient (61.2, 61.4) configured for connection to outlet openings of the integral cooling channel structure of the carrier plate (31.2), and wherein the inlet opening (81.2) of the bypass tube (80.2) is positioned at the coolant recipient (61.2, 61.4).

## Patentansprüche

1. Ein Batteriepack (200) für ein Fahrzeug (300), aufweisend:
- eine Vielzahl von Batteriemodulen (100.1, 100.2), die in zumindest zwei verschiedenen Ebenen (210, 220) des Batteriepacks (200) übereinander positioniert sind; und
- einen Flüssigkeitskühlkreislauf, der in jeder der Ebenen (210, 220) des Batteriepacks (200) mit den Batteriemodulen (100.1, 100.2) in thermischem Kontakt steht,
wobei der Flüssigkeitskühlkreislauf ein Umgehungsrohr (80.2) mit einer Einlassöffnung (81.2), die an einem höchsten Punkt des Kühlkreislaufs positioniert ist, und einer Auslassöffnung (83.2), die an einem tieferen Punkt des Kühlkreislaufs innerhalb des Kühlkreislaufs positioniert ist, aufweist,
wobei der Kühlkreislauf ein Verbindungsrohr (62.3), das sich vertikal zwischen den Ebenen (210, 220) des Batteriepacks (200) erstreckt, aufweist, und
wobei das Umgehungsrohr (80.2) durch das Innere des Verbindungsrohrs (62.3) verläuft.

2. Das Batteriepack nach Anspruch 1, wobei die Auslassöffnung (83.2) des Umgehungsrohrs (80.2) in einem Kühlrohr (63.2), das in der untersten Ebene (210) des Batteriepacks (200) bereitgestellt wird, positioniert ist.

3. Das Batteriepack nach Anspruch 2, wobei ein Verhältnis eines Querschnitts der Auslassöffnung (83.2) des Umgehungsrohrs (80.2) und eines Querschnitts des Kühlrohrs (63.2) an der Auslassöffnung (83.2) im Bereich von 1 : 2 bis 1 : 10, vorzugsweise im Bereich von 1 : 3 bis 1 : 5, liegt.

4. Das Batteriepack nach einem der vorhergehenden Ansprüche, wobei zumindest die oberste Ebene (220) des Batteriepacks (200) eine Trägerplatte (31.2) für ein oder mehrere Batteriemodule (100.2) aufweist, wobei die Trägerplatte (31.2) eine integrale Kühlkanalstruktur aufweist,
wobei der Kühlkreislauf ferner einen Kühlmittelbehälter (61.2, 61.4) aufweist, der zur Verbindung mit Auslassöffnungen der integralen Kühlkanalstruktur der Trägerplatte (31.2) konfiguriert ist, und wobei die Einlassöffnung (81.2) des Umgehungsrohrs (80.2) am Kühlmittelbehälter (61.2, 61.4) positioniert ist.

## Revendications

1. Bloc-batterie (200) pour un véhicule (300) comprenant :
- une pluralité de modules de batterie (100.1, 100.2) qui sont positionnés les uns au-dessus des autres dans au moins deux niveaux différents (210, 220) du bloc-batterie (200) ; et
- un circuit de refroidissement de liquide qui est en contact thermique avec les modules de batteries (100.1, 100.2) dans chacun des niveaux (210, 220) du bloc-batterie (200),
dans lequel le circuit de refroidissement de liquide comprend un tube de dérivation (80.2) avec une ouverture d'entrée (81.2) positionnée au point le plus haut du circuit de refroidissement et une ouverture de sortie (83.2) positionnée au niveau d'un point inférieur du circuit de refroidissement à l'intérieur du circuit de refroidissement,
dans lequel le circuit de refroidissement comprend un tube de raccordement (62.3) s'étendant verticalement entre les niveaux (210, 220) du bloc-batterie (200), et
dans lequel le tube de dérivation (80.2) passe à l'intérieur du tube de raccordement (62.3).

2. Bloc-batterie selon la revendication 1, dans lequel l'ouverture de sortie (83.2) du tube de dérivation (80.2) est positionnée dans un tube de refroidissement (63.2) prévu au niveau le plus bas (210) du bloc-batterie (200).

3. Bloc-batterie selon la revendication 2, dans lequel un rapport d'une section transversale de l'ouverture de sortie (83.2) du tube de dérivation (80.2) et d'une section transversale du tube de refroidissement (63.2) au niveau de l'ouverture de sortie (83.2) est dans la plage de 1:2 à 1:10, de préférence dans la plage de 1:3 à 1:5.

4. Bloc-batterie selon l'une quelconque des revendications précédentes, dans lequel au moins le niveau le plus haut (220) du bloc-batterie (200) comprend une plaque de support (31.2) pour un ou plusieurs modules de batterie (100.2), la plaque de support (31.2) comprenant une structure de canal de refroidissement solidaire,
dans lequel le circuit de refroidissement comprend en outre un récipient de réfrigérant (61.2, 61.4) configuré pour le raccordement aux ouvertures de sortie de la structure de canal de refroidissement solidaire de la plaque de support (31.2), et dans lequel l'ouverture d'entrée (81.2) du tube de dérivation (80.2) est positionnée au niveau du récipient de réfrigérant (61.2, 61.4) .
